(19) Europäisches Patentamt
European Patent Office
Office européen des brevets

(11) **EP 4 171 015 A1**

(12) **EUROPEAN PATENT APPLICATION**

(43) Date of publication:
**26.04.2023 Bulletin 2023/17**

(21) Application number: **21203696.6**

(22) Date of filing: **20.10.2021**

(51) International Patent Classification (IPC):
**H04N 5/262** (2006.01)

(52) Cooperative Patent Classification (CPC):
**H04N 5/2628; H04N 23/683**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventor: **VAREKAMP, Christiaan**
**Eindhoven (NL)**

(74) Representative: **Philips Intellectual Property & Standards**
**High Tech Campus 52**
**5656 AG Eindhoven (NL)**

(54) **HANDLING BLUR IN MULTI-VIEW IMAGING**

(57) A method for processing multi-view data of a scene. The method comprises obtaining at least two images of the scene from different cameras, determining a sharpness indication for each image and determining a confidence score for each image based on the sharpness indications. The confidence score is for use in the determination of weights when blending the images to synthesize a new virtual image.

FIG. 1

**Description**

FIELD OF THE INVENTION

The invention relates to the field of multi-view imaging. In particular, the invention relates to processing multi-view data of a scene.

BACKGROUND OF THE INVENTION

Multi camera video capture, depth estimation and view-point interpolation allow for applications such as augmented and virtual reality playback.

When a camera captures fast-moving objects, motion blur will occur. This can cause multiple problems when synthesizing an image from various source views obtained from different cameras. For instance, when performing multi-view depth estimation, the algorithm will have difficulty determining a correct depth for the blurred foreground object due to the semi-transparent appearance and the lack of texture. When the estimated depth maps are then used to synthesize a new image from the source views, a single fast-moving object will be wrongly positioned and, potentially, visible at multiple image locations due the fact that one or more source views estimated a wrong depth for the object.

Thus, there is a need for a method of handling motion blur when processing multi-view data. More generally, there is a need for handing blur in multi-view data.

SUMMARY OF THE INVENTION

The invention is defined by the claims.

According to examples in accordance with an aspect of the invention, there is provided a method for processing multi-view data of a scene, the method comprising:

> obtaining at least two images of the scene from different cameras;
> determining a sharpness indication for each image; and
> determining a confidence score for each image based on the sharpness indications, wherein the confidence score is for use in the determination of weights when blending the images to synthesize a new virtual image.

The method may solve the problem of erroneous or inaccurate depth and/or texture data caused by the differences between cameras used to obtain the images. In particular, differences between the cameras may cause different degrees of blurring in the images. A significant difference between the cameras is the pose of each camera. For example, different poses can lead to motion blur affecting the different images to a greater or lesser extent. The method may be suitable for handling motion blur.

Motion blur is the apparent streaking or blurring of moving objects in an image. It results from the object moving from a first position to a second position during a single exposure time. Significant motion blur can occur due to rapid movement of the object or long exposure times.

Multi-view data of a scene typically requires data (e.g. depth maps and images) of the scene being obtained by a number of different cameras. If there is a moving object in the scene, the extent of the motion blur will depend on the positioning of the camera in the scene (and thus the viewpoint of the image/depth map). For example, a camera imaging an object moving away from the camera may not have much motion blur, however, an object moving horizontally across the viewpoint of the camera may generate a significant amount of motion blur.

Thus, the inventors propose using sharpness indications for images from different viewpoints to generate confidence scores for the images. The sharpness indication provides an indication of an amount of blur in an image. For example, the blur may be motion blur. The sharper an image is, the less blur there is in the image.

The sharpness indication may include a measure of sharpness. Sharpness is a measure of an image's clarity in terms of both focus and contrast. The sharpness indication may include a determination of contrast for the corresponding image.

A sharpness indication is determined for each image and the sharpness indication for each image may be compared. A confidence score can be generated for each image based on the sharpness indication. The confidence score may be a value between 0 and 1, where 0 is not confident and 1 is confident. In general, images with a high sharpness indication (i.e. indicating a low amount of blur) will have a higher confidence score compared to images with a low sharpness indication (i.e. indicating a high amount of blur).

The confidence score may be directly proportional to the sharpness. The confidence score may be 0 for values of the sharpness indication lower than a cut-off threshold value (i.e. confidence = 0 for particularly blurry objects). The confidence score could be limited to a plurality of discrete confidence values, wherein each discrete confidence value is defined by different sharpness indications (e.g. for eight discrete confidence values, divide sharpness indication into eight ranges).

The confidence score may be determined by comparing the sharpness indications at each comparison viewpoint and determining the confidence score based on the corresponding sharpness indication and the comparison. For example, for two images with relative sharpness indications of "medium" and "low" for the first and second images respectively, the confidence score for the first image will be higher than the confidence score for the second. However, if the first image had a relative sharpness indication of "high", the confidence score for the first image may be higher than in the previous example.

The confidence score may also be used to identify (and further reduce the effects of) the causes of potential artefacts which could occur when synthesizing an image with the corresponding images. These causes may occur due to the images being obtained with, for example, different sharpness or different focal lengths as well due to motion blur (as described above).

In general, the differences in sharpness for each of the images is used to determine a confidence score for each image. Different images (obtained at different viewpoints) may have different levels of sharpness a variety of different reasons (e.g. different focus lengths, accidental unfocusing, motion blur, post-processing blur etc.). Thus, the invention provides a method for handling blur in general for multi-view data processing.

The sharpness indication may be a sharpness map comprising a plurality of sharpness values each corresponding to one or more pixels of the corresponding image.

The confidence score may also comprise a map of confidence values, wherein each confidence value corresponds to one or more pixels of the images and/or one or more sharpness values. The confidence values may be determined based on the sharpness value of the corresponding pixels. The higher the sharpness value, the higher the confidence value. In other words, pixels with high sharpness will be given a high confidence value whilst a group of pixels with low sharpness will be given a low confidence value. Each pixel in the image may have a corresponding sharpness value and a confidence value. In other words, the confidence score may be a confidence map.

Determining a sharpness value for one or more pixels may be dependent on one or more neighboring sharpness values

For example, motion blur typically affects a larger region than just one pixel. Thus, in some instances, it may be advantageous to set the confidence value to low for the pixels being evaluated directly and also for neighboring pixels. This may result in a gradient of confidence values in the confidence map and a reduction in outlier confidence values. This is advantageous as it is unlikely that a single pixel (or a small of group of pixels) will be blurry if the neighboring pixels are not blurry.

The method may further comprise obtaining at least one depth map of the scene warping at least two of the images to a target viewpoint based on the at least one depth map and blending the images at the target viewpoint to generate a synthesized image, wherein, during blending, each pixel in the images is weighted based on the corresponding confidence score.

The method may further comprise obtaining at least one depth map of the scene, warping at least one image to at least one image comparison viewpoint using the at least one depth map such that there are at least two images at each image comparison viewpoint and comparing the pixel color values of the images at each comparison viewpoint, wherein determining a confidence score for each image is further based on the comparison of the pixel color values.

A sharpness indication of an image will also correspond to any warped image obtained by warping the image. A warped image contains the same pixel color values as the original image which was warped projected to a different viewpoint (i.e. the comparison viewpoint). Similarly, the sharpness indication of a warped image will also correspond to the image which was warped to generate the warped image.

In a multi-view camera set-up, the sensors (e.g. cameras, depth sensors etc.) may be positioned at different places in the scene and thus have different amounts of motion blur. This also means that some images may have the expected color values of an object whilst some may not (i.e. the object will look blurry). Thus, the images can be warped to a comparison viewpoint and compared. The images are warped to a comparison viewpoint such that the color values of the images can be compared from a common viewpoint (i.e. the texture data of one image can be compared to the corresponding texture data of another image).

Each image is warped by using a depth map at the viewpoint of the image. A depth map could be obtained at the viewpoint of each image or the method could obtain at least one depth map and warp it to the viewpoint of each image. Each pixel of an image may be given a 3D coordinate in a virtual scene by using the pose (position and orientation) of the viewpoint and the depth for each pixel (obtained from the depth map at the viewpoint of the image). The pixel is then warped to a different viewpoint by projecting the 3D coordinate to an imaging plane from a different pose in the virtual scene.

Corresponding pixel color values are compared, at the image comparison viewpoints, in order to further determine the confidence score. One way of comparing the pixel colors is to determine the mean color for a location for all views (e.g. averaging all pixels corresponding to a location) and, the larger the difference between a pixel color and the mean from all views, the lower the corresponding confidence value.

Thus, if one of the images is blurry and has pixel values of the background where an object is supposed to be, the color values of the blurry area would have a low confidence value in the confidence score.

The image comparison viewpoints may comprise or consist of all of the viewpoints of the images.

Alternatively, the comparison viewpoints may consist of a subset of one or more of these viewpoints.

The images, depth map(s) and corresponding confidence scores may be transmitted to e.g. a client device that wishes to synthesize a new image based on the images.

In this case, the determination of the confidence scores could be done prior to any rendering/synthesizing of a new image. For example, determination of the confidence score could be performed at a server (or encoder) where there is more processing power available and then transmitted to a client for rendering a new image with the transmitted images, depth maps and confidence scores.

Synthesizing images from multi-view data may be based on blending the pixel values of different images of the multi-view data. If the different images show a fast moving object with different amounts of motion blur, the synthesized image may show the fast moving object at the wrong position in the scene or even at multiple positions in the scene.

Thus, it is proposed to use the confidence score to weight each pixel in an image during the blending of the images to generate the synthesized image. For pixels with areas in an image with large amounts of motion blur, the corresponding depth maps will likely have confidence scores with low confidence scores (e.g. for that particular area). Thus, pixels showing significant motion blur will be weighted low relative to other corresponding pixels with no motion blur during the blending and the synthesized view is less likely to show a fast moving object at a different position (or at multiple positions).

The color value of a pixel in the synthesized image may be: $C_S \propto \sum_{i=1}^{n} W_i C_i$ , where n is the number of depth maps, C is a color value of the corresponding pixel in a warped depth map and W is a corresponding numerical confidence score.

The image comparison viewpoint may be a target viewpoint and the method may further comprise blending the images at the target viewpoint to generate a synthesized image, wherein, during blending, each pixel in the images is weighted based on the corresponding confidence score.

The determination of the confidence scores could be done during the synthesizing of a new image. Images may need to be warped during synthesizing and they also need to be warped in order to be compared. Thus, both warping steps can be combined and, when the images are warped for synthesizing a new image, but before they are blended, a confidence score can be determined for use in the blending (i.e. for use as an indication of the weights for the pixels).

The method may further comprise obtaining at least two depth maps, wherein the depth maps are obtained from different sensors or generated from at least one different image of the scene, warping at least one depth map to at least one depth comparison viewpoint such that there are at least two depth maps at each image comparison viewpoint, comparing the depth maps at each depth comparison viewpoint and determining a confidence score for each depth map based on the comparison of the depth maps.

The depth comparison viewpoint(s) may be one or more of the viewpoints of the depth maps. In this case, each depth map can be warped to one or more viewpoints of the other depth map(s) and compared at each of the depth comparison viewpoint. Alternatively the depth comparison viewpoints may be one or more of the image comparison viewpoints. The depth comparison viewpoint may only be a target viewpoint.

The depth maps from different viewpoints will have different depth values for an object based on the amount of motion blur. For example, a depth map may be generated based on performing depth estimation on two images. If the two images have a significant amount of motion blur, the object (or part of the object) may seem semi-transparent in the images and the texture values of the pixels corresponding to the object may be partly based on the background texture value. Thus, the estimated depth maps may have background depth values for a position corresponding to the object.

Similarly, a depth map obtained with a depth sensor may have erroneous depth values for an object due to the movement of the object during the capture/exposure time of the depth sensor.

Thus, the confidence score may further indicate the likelihood of the depth values for particular regions of the depth map being correct. For example, for a depth map estimated from two images with a significant amount of motion blur, the depth map may only have depth data for the background (not the object). When the depth map is warped and compared to other warped depth maps with correct depth values for the object, a low confidence value may be given in the corresponding region of a confidence map where the object is expected to be (i.e. based on the other depth maps). If two (or more) warped depth maps have the same (or similar) depth data then a high confidence value may be given in the corresponding region of the confidence map.

A depth map that may likely have a correct depth for a foreground object (e.g. by checking for high confidence in corresponding depth confidence map) can be warped to another viewpoint to determine if it is expected that the depth map of the other viewpoint has a wrong depth by comparing with that depth in that other view. In other words, the depth map of a first viewpoint may be warped to a second viewpoint and the predicted depth at the second viewpoint is compared to help determine if the observed depth of the second viewpoint is correct. If not, it can be flagged in the target view and given a low confidence score.

The method may further comprise obtaining at least two depth confidence maps corresponding to the depth maps and warping at least one depth confidence map to the at least one depth comparison viewpoint with the corresponding depth maps, wherein comparing the depth maps at each depth comparison viewpoint further comprises comparing the corresponding depth confidence maps.

In some cases, each depth map may be associated with a depth confidence map which was generated during the generation of the corresponding depth map and may provide an indication of the likelihood of each depth value being accurate. The indication of likelihood for a particular depth value may be based on the available data (e.g. images) used during the estimation of the depth value.

The invention also provides a computer program product comprising computer program code which, when executed on a computing device having a processing system, cause the processing system to perform all of the steps of the method for processing multi-view data of a scene.

The invention also provides a system for processing multi-view data of a scene, the system comprising a processor configured to:

obtain at least two images of the scene from different cameras;

determine a sharpness indication for each image; and

determine a confidence score for each image based on the sharpness indications, wherein the confidence score is for use in the determination of weights when blending the images to synthesize a new virtual image.

The processor may be further configured to obtain at least one depth map of the scene, warp at least two of the images to a target viewpoint based on the at least one depth map and blend the images at the target viewpoint to generate a synthesized image, wherein, during blending, each pixel in the images is weighted based on the corresponding confidence score.

The processor may be further configured to obtain at least one depth map of the scene, warp at least one image to at least one image comparison viewpoint using the at least one depth map such that there are at least two images at each image comparison viewpoint and compare the pixel color values of the images at each comparison viewpoint, wherein determining a confidence score for each image is further based on the comparison of the pixel color values.

The image comparison viewpoints may comprise or consist of all of the viewpoints of the images.

The image comparison viewpoint may be a target viewpoint and the processor may be further configured to blend the images at the target viewpoint to generate a synthesized image, wherein, during blending, each pixel in the images is weighted based on the corresponding confidence score.

The processor may be further configured to obtain at least two depth maps, wherein the depth maps are obtained from different sensors or generated from at least one different image of the scene, warp at least one depth map to at least one depth comparison viewpoint such that there are at least two depth maps at each image comparison viewpoint, compare the depth maps at each depth comparison viewpoint and determine a confidence score for each depth map based on the comparison of the depth maps.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 illustrates a scene imaged by a multi-camera setup;
Fig. 2 shows a first embodiment for determining a confidence score; and
Fig. 3 shows a second embodiment for determining a confidence score.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for processing multi-view data of a scene. The method comprises obtaining at least two images of the scene from different cameras, determining a sharpness indication for each image and determining a confidence score for each image based on the sharpness indications. The confidence score is for use in the determination of weights when blending the images to synthesize a new virtual image.

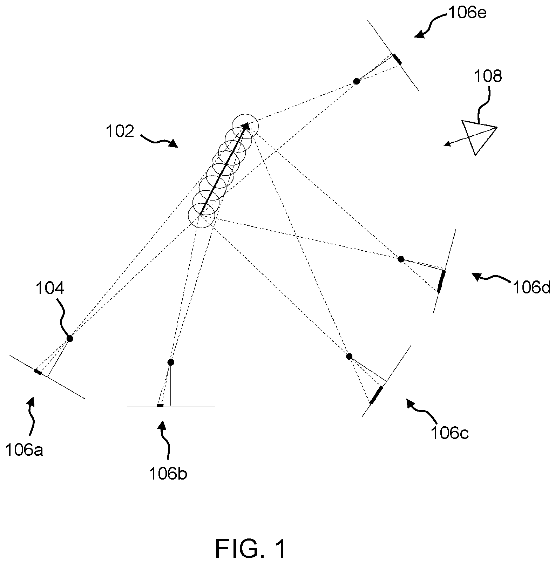

Fig. 1 illustrates a scene imaged by a multi-camera setup. The multi-camera setup shown comprises five capture cameras 104 and one virtual camera 108 for which a virtual view image will be synthesized. Fig. 1 is used to show potential problems which arise when processing multi-view data of a fast-moving object.

A fast-moving circular object 102 is illustrated by a set of circles that are all captured within a specific integration time by all cameras 104. The cameras 104 are assumed to be synchronized in this example for simplicity. The magnitude of the induced motion blur due to the motion of the object 102 is indicated by the solid line on each projection plane 106a-e for each of the five cameras 104. The motion blur is relatively small in the projection planes 106a and 106b and larger in the projection planes 106c and 106d. The projection plane 106e shows a motion blur that is neither large nor small. A virtual camera 108 is illustrated for which a virtual image will be synthesized at a target viewpoint.

Depth estimation will likely succeed for the images corresponding to the projection planes 106a, 106b and 106e. However, depth estimation will likely fail for the images corresponding to the projection planes 106c and 106d due to motion blur. Motion blur removes texture from the image of the foreground object 102 and may make it appear semi-transparent. The latter may mean that the depth estimation likely 'sees-through' the fast-moving foreground object 102 and will assign the local background depth to the pixels in the blurred region. In other words, the background texture may shine through the foreground object 102 in areas with motion blur and thus the depth map generated from the images with motion blur would show the foreground object 102 as having the depth of the background.

When an image is synthesized at the target viewpoint of the virtual camera 108 by using images and depth maps corresponding to the projection planes 106d and 106c (i.e. the projection planes with the most motion blur), the new virtual image may show a blurry texture of the object 102 which appears to be in the background. Thus, other images which are not as blurry may need to be used. In order to determine which images to use, it is proposed to determine a sharpness indication for each image. The sharpness indication is a measure of blurriness in each image.

Conventionally, when synthesizing a new virtual image at the target viewpoint of the virtual camera 108, the images corresponding to the projections planes 106d and 106e would have a higher weight as they are the closest and the images of 106a and 106b would have the lowest weights as they are the furthest from the virtual camera 108. However, a new confidence score can be given for each image based on the sharpness indication, and the synthesizing of a new virtual image can be further weighted based on the confidence score.

Thus, when synthesizing a new virtual image, the pixels in the sharper images of 106a and 106b which are used in the generation of the new virtual image may be weighted higher than the pixels in the blurry images of 106d and 106c and, similarly, the pixels in the image of 106e may be weighted higher than the image of 106d. Some pixels in the sharper images of 106a and 106b (or any of the images) may not be used as they are not needed for the generation of the new virtual image. For example, the image of 106a contains mostly texture data of the left side of the object 102 whilst the virtual camera 108 is mostly "imaging" the right side of the object 102. Thus, most of the pixels in the image of 106a may not be used in the generation of the new virtual image.

For example, as the image of 106e is the closest and is not the blurriest (compared to the other images), the overall weighting (e.g. based on the confidence score and proximity) during synthesis may be high for the image of 106e, slightly lower for the images of 106a and 106b and the lowest for the images of 106c and 106d.

The method may be used during rendering or as a pre-processing step prior to rendering.

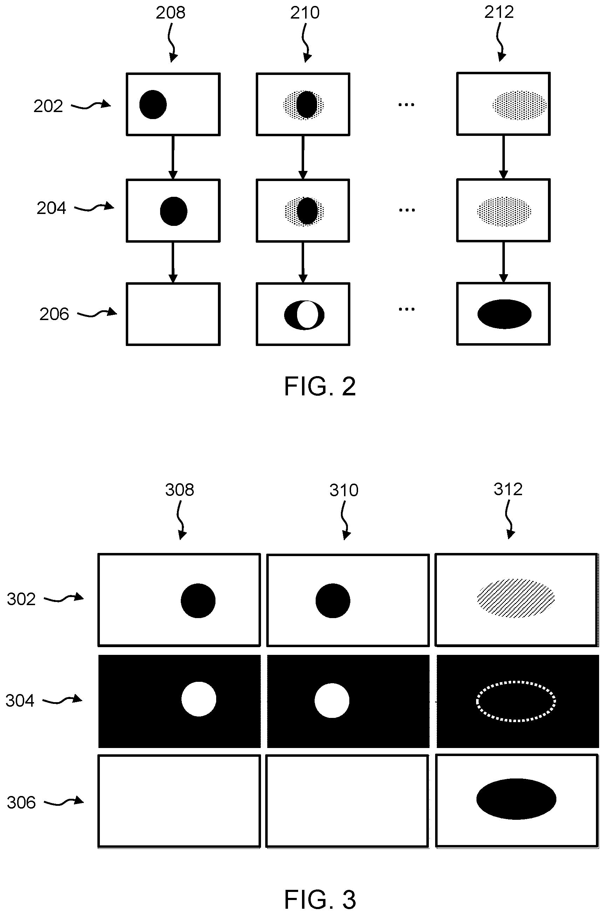

Fig. 2 shows a first embodiment for determining a confidence score during rendering. While rendering from source view images 202 to a target viewpoint, pixels originating from uncertain source view pixels in the source view image 202 are detected by comparing the sharpness of incoming warped source view pixels in the target coordinate system. This case is relevant since it allows, on-the-fly (during rendering) source view analysis and synthesis.

It should be noted that it is also possible to determine confidence scores at different viewpoints (e.g. the coordinate system of the source view images 202) as a separate pre-processing step where the source views images 202 are first warped to one or more comparison viewpoints to establish a confidence score for each pixel before using the data to start rendering.

Three camera views 208, 210 and 212, from a set of multiple camera views, are shown in Fig. 2. The source view image 202 for camera view 208 is a sharp image of a circular object. The source view image 202 for camera view 210 is a somewhat sharp image of the circular object showing a sharp region in the center of the image and a blurry section (e.g. due to motion blur) around the sides of the object.

The source view image 202 for camera view 212 is a blurry image of the circular image. Each source view image 202 is warped to the target viewpoint and a sharpness indication is determined for each warped image 204. The sharpness indication is a measure of sharpness for each warped image. For example, a measure of per-pixel contrast may be used to determine the sharpness indication. A measure of focus may also be used.

Additionally, if the predicted color originating from a source view image differs much from the predicted mean over all source view images, then that source view contribution receives a lower confidence resulting in a lower blend weight. This covers the case when a blurred foreground object is falsely measured as having the background depth as, in that case, it will be warped to a wrong position (i.e. based on the wrong depth) and will likely end up at a location where the other source views predict a different color (e.g. the green grass).

If, for a source view contribution (e.g. a pixel of a warped image 204), a measure of image sharpness is much lower than the average from the other contributions, then that source view contribution also receives a lower confidence also resulting in a lower blend weight. This covers the case that the blurred foreground object (possibly in part) has the correct depth and hence mapped onto the right location. Weighting a blurred pixel contribution equally to the other, sharper, contributions may result in image blur.

The sharpness indication may be based on identifying blurry regions of the warped images 204. For example, a per-pixel contrast value may be determined for each pixel in the warped image 204 creating a contrast map for each warped image 204. The contrast map could thus be used as the sharpness indication. Alternatively, the sharpness indication may be a single value which can be compared to the sharpness indication of the other warped images 204.

The sharpness indications of the warped images 204 are then compared at the comparison viewpoint and confidence scores 206 are generated for each camera view. The confidence scores 206 illustrated in Fig. 2 are confidence maps. A confidence map 206 comprises a confidence value for each pixel (or group of pixels) in the corresponding source view images 202.

The confidence map 206 of camera view 208 shows a high confidence (illustrated as white) for the whole source view image 202 of camera view 208, as the source view image 202 is sharp and thus the sharpness indication will be high. The confidence map 206 of camera view 210 shows a high confidence for the sharp region of the object but a low confidence (illustrated as black) for the blurry regions of the image 202. Similarly, the confidence map 206 of camera view 212 shows a low confidence for the blurry region.

Thus, the confidence maps 206 can be used during synthesis of a new virtual image as part of the weighting. The blurry regions in camera views 210 and 212 will have a relatively low weighting when synthesizing the circular object compared to the sharp regions of camera views 208 and 210.

Fig. 3 shows a second embodiment for determining a confidence score in pre-processing (i.e. prior to rendering). In the second embodiment, uncertain regions of an image are detected by comparing the depth and sharpness of corresponding pixels for multiple source view images 302. Three source view images 302 of a scene are shown with corresponding depth maps 304 and confidence maps 306. Camera views 308 and 310 show sharp images 302 of a fast-moving circular foreground object. The corresponding depth maps 304 show an estimation of the depth of the circular object.

Camera view 312 shows an image 302 with motion blur for the object. Consequently, the background texture (illustrated as white) is visible through the semi-transparent foreground object (illustrated as black). The corresponding estimated depth map 304 shows the background depth where the circular object is expected to be. A dotted line is shown in the depth map 304 corresponding to camera view 312 showing where the depth of the circular object should have appeared in the depth map 304.

In order to avoid synthesis errors when synthesizing a new virtual image from the three camera views 308, 310 and 312, a confidence map 306 is generated for each camera view, where the generation of the confidence maps 306 is further based on a comparison between the depth maps 304 as well as the source view images 302 in addition to the comparison of sharpness indications.

Each source view 302 is warped to all other views using the associated depth maps 304. A source view pixel is further flagged as having a low associated confidence if the color and/or texture variation of the warped source view differs too much from the color and/or texture variation of the target view. For example, when warping source view 308 to source view 310, the colors will match as the object's color and local texture variation will closely match. This will also hold when warping source view 310 to source view 308. However, when warping the pixels in source view 312 to either 308 or 310, the color and/or texture variation of the object will not match as the depth that was used to warp the object's pixels was incorrect. Thus, the confidence score is set to a low value for the object's pixels in source view 312.

Using the depth maps 304 as an additional measure for generating the confidence maps 306 may increase the accuracy of the confidence maps 306. For example, for complex images with varying levels of sharpness, a comparison between depth maps 304 may further aid in identifying the most blurry regions of the complex images.

A new image is typically generated from the source view images 302 by warping the source view images 302 to a target viewpoint and then blending the warped images. The image region around the source view 302 for camera view 312 corresponds to a blurred object and, thus, has a low confidence value on the confidence map 306. The confidence map 306 can be warped with the source view image 302 to the target viewpoint and used as a weight in the blending operation for the generation of a new virtual image. As a result, the fast-moving object will appear sharp in the new virtual image.

In summary, it is proposed to use the differences in sharpness (and potentially color and depth) between source views to solve the problems of depth estimation and new view synthesis. During depth estimation, the estimated depth and texture difference (i.e. color and sharpness) between source views may be compared. This information is then used to estimate a confidence score for the images (and corresponding depth maps) where the pixels corresponding to motion blur (or any blur in general) are set to a low confidence. For example, when considering motion blur, the confidence scores of the images may provide indications about the locations where fast-moving objects are more likely to be positioned in 3D space.

One approach of determining the sharpness indication is to calculate a local, per-pixel, contrast measure for each image in the source view image coordinate system and then warp the measure together with the color (and optionally depth) using a depth map to a target viewpoint (i.e. viewpoint at which a new image will be generated).

It is also possible to only warp color for each image to the target viewpoint. For instance, eight source views may provide eight images which could be warped to a target virtual viewpoint and the result is stored in GPU memory (i.e. a memory module of a graphics processing unit). In a separate shader, local contrast can be calculated for each warped image. Based on the local contrast, confidence (and thus a blend weight) is determined. Both approaches may also be used with comparison viewpoints instead of the target viewpoint, where the comparison viewpoints will typically comprise the viewpoints of each of the images.

Additionally, during novel image synthesis, image regions with a lower confidence score may receive a low blend weight. The use of confidence scores for novel view synthesis may avoid multiple copies of fast-moving objects becoming visible and, thus, causes the newly synthesized image to be sharper than it would have been without the use of the confidence scores.

There are different approaches for when and where to determine the confidence scores and by whom it is determined. In one example, an encoder may determine the confidence scores as and when (or after) the images are obtained and transmit/broadcast the confidence scores with the images. Thus, a decoder can receive the images and confidence scores and synthesize a new image using the images and confidence scores. In another example, a decoder may receive the images, determine the confidence scores and synthesize a new image. The confidence scores may be determined during rendering (as shown in Fig. 2) or as a pre-processing step prior to rendering (as shown in Fig. 3).

As discussed above, the method makes use of warping images and depth maps. Warping may comprise applying a transformation to a source view image and/or a source view depth map, wherein the transformation is based on the viewpoint of the source view image and or/source view depth map and a known target viewpoint. The viewpoints are defined at least by a pose of a virtual camera (or sensor) in 3D space (i.e. a position and an orientation). For example, the transformation may be based on the difference between the pose corresponding to the depth map and a known target pose corresponding to the target viewpoint. When referring to warping, it should be understood that forward warping and/or inverse (backwards) warping could be used. In forward warping, source pixels are projected onto the target image using point or triangle primitives constructed in the source view image coordinate system. In backward warping, the target pixels are inversely mapped back to a position in the source view image and sampled accordingly.

Possible warping approaches include using points, using a regular mesh (i.e. predefined size and topology) and/or using an irregular mesh.

For example, using points may comprise using a depth map (for each given pixel) from a first viewpoint (view A) to calculate the corresponding location in a second viewpoint (view B) and fetching the pixel location from view B back to view A (i.e. an inverse warp).

Alternatively, for example, using points may comprise using the depth map (for each given pixel) of view A to calculate the corresponding pixel location in view B and mapping the pixel location from view A to view B (i.e. a forward warp).

Using a regular mesh (e.g. two triangles per pixel, two triangles per 2x2 pixels, two triangles per 4x4 pixels etc.) may comprise calculating 3D mesh coordinates from the depth map in view A and texture mapping data from view A to view B.

Using an irregular mesh may comprise generating a mesh topology for view A based on the depth map (and, optionally, texture and/or transparency data in view A) and texture mapping the data from view A to view B.

An image may be warped by using corresponding depth maps. For example, for an image view A and a depth map at view B, the depth map can be warped to view A and then the image can be warped to a different view C based on warping depth pixels corresponding to the image pixels.

The skilled person would be readily capable of developing a processor for carrying out any herein described method. Thus, each step of a flow chart may represent a different action performed by a processor, and may be performed by a respective module of the processor.

As discussed above, the system makes use of a processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

**Claims**

1. A method for processing multi-view data of a scene, the method comprising:

   obtaining at least two images (202, 302) of the scene from different cameras (104);
   determining a sharpness indication for each image (202, 302); and
   determining a confidence score (206, 306) for each image (202, 302) based on the sharpness indications, wherein the confidence score (206, 306) is for use in the determination of weights when blending the images (202, 302) to synthesize a new virtual image.

2. The method of claim 1, wherein the sharpness indication is a sharpness map comprising a plurality of sharpness values each corresponding to one or more pixels of the corresponding image (202, 302).

3. The method of any one of claims 1 or 2, further comprising:

   obtaining at least one depth map (304) of the scene;
   warping at least two of the images (202, 302) to a target viewpoint based on the at least one depth map (304); and
   blending the images (202, 302) at the target viewpoint to generate a synthesized image, wherein, during blending, each pixel in the images (202, 302) is weighted based on the corresponding confidence score (206, 306).

4. The method of any one of claims 1 or 2, further comprising:

   obtaining at least one depth map (304) of the scene;

   warping at least one image (202, 302) to at least one image comparison viewpoint using the at least one depth map (304) such that there are at least two images (202, 302) at each image comparison viewpoint; and
   comparing the pixel color values of the images (202, 302) at each comparison viewpoint, wherein determining a confidence score (206, 306) for each image (202, 302) is further based on the comparison of the pixel color values.

5. The method of claim 4, wherein the image comparison viewpoints comprise or consist of all of the viewpoints of the images (202, 302).

6. The method of claim 4, wherein the image comparison viewpoint is a target viewpoint and the method further comprises blending the images (202, 302) at the target viewpoint to generate a synthesized image, wherein, during blending, each pixel in the images (202, 302) is weighted based on the corresponding confidence score (206, 306).

7. The method of any one of claims 1 to 6, further comprising:

   obtaining at least two depth maps (304), wherein the depth maps (304) are obtained from different sensors or generated from at least one different image (202, 302) of the scene;
   warping at least one depth map (304) to at least one depth comparison viewpoint such that there are at least two depth maps (304) at each image comparison viewpoint;
   comparing the depth maps (304) at each depth comparison viewpoint; and
   determining a confidence score (206, 306) for each depth map (304) based on the comparison of the depth maps (304).

8. The method of any one of claims 6 or 7, further comprising:

   obtaining at least two depth confidence maps corresponding to the depth maps (304); and
   warping at least one depth confidence map to the at least one depth comparison viewpoint with the corresponding depth maps (304),
   wherein comparing the depth maps (304) at each depth comparison viewpoint further comprises comparing the corresponding depth confidence maps.

9. A computer program product comprising computer program code which, when executed on a computing device having a processing system, cause the processing system to perform all of the steps of the method according to any of claims 1 to 8.

10. A system for processing multi-view data of a scene, the system comprising a processor configured to:

> obtain at least two images (202, 302) of the scene from different cameras;
> determine a sharpness indication for each image (202, 302); and
> determine a confidence score (206, 306) for each image (202, 302) based on the sharpness indications, wherein the confidence score (206, 306) is for use in the determination of weights when blending the images (202, 302) to synthesize a new virtual image.

11. The system of claim 10, wherein the processor is further configured to:

> obtain at least one depth map (304) of the scene;
> warp at least two of the images (202, 302) to a target viewpoint based on the at least one depth map (304); and
> blend the images (202, 302) at the target viewpoint to generate a synthesized image, wherein, during blending, each pixel in the images (202, 302) is weighted based on the corresponding confidence score (206, 306).

12. The system of claim 10, wherein the processor is further configured to:

> obtain at least one depth map (304) of the scene;
> warp at least one image (202, 302) to at least one image comparison viewpoint using the at least one depth map (304) such that there are at least two images (202, 302) at each image comparison viewpoint; and
> compare the pixel color values of the images (202, 302) at each comparison viewpoint, wherein determining a confidence score (206, 306) for each image (202, 302) is further based on the comparison of the pixel color values.

13. The system of claim 12, wherein the image comparison viewpoints comprise or consist of all of the viewpoints of the images (202, 302).

14. The system of claim 12, wherein the image comparison viewpoint is a target viewpoint and the processor is further configured to blend the images (202, 302) at the target viewpoint to generate a synthesized image, wherein, during blending, each pixel in the images (202, 302) is weighted based on the corresponding confidence score (206, 306).

15. The system of any one of claims 10 to 14, wherein the processor is further configured to:

> obtain at least two depth maps (304), wherein the depth maps (304) are obtained from different sensors or generated from at least one different image (202, 302) of the scene;
warp at least one depth map (304) to at least one depth comparison viewpoint such that there are at least two depth maps (304) at each image comparison viewpoint;
compare the depth maps (304) at each depth comparison viewpoint; and
determine a confidence score (206, 306) for each depth map (304) based on the comparison of the depth maps (304).

FIG. 1

FIG. 2

FIG. 3

Europäisches
Patentamt

European
Patent Office

Office européen
des brevets

# EUROPEAN SEARCH REPORT

Application Number

**EP 21 20 3696**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/212651 A1 (SAWADA KEIICHI [JP]) 23 August 2012 (2012-08-23) | 1,9,10 | INV. H04N5/262 |
| A | * paragraph [0048] – paragraph [0055]; figures 1,6 * | 2 | |
| A | JP 2021 027584 A (CANON KK) 22 February 2021 (2021-02-22) * paragraph [0153] * | 2 | |

TECHNICAL FIELDS
SEARCHED (IPC)

H04N

~~The present search report has been drawn up for all claims~~

| Place of search | Date of completion of the search | Examiner |
|---|---|---|
| The Hague | 18 March 2022 | Wahba, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

    see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

    1, 2, 9, 10

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

    **1. claims: 1, 2, 9, 10**

        **to improve the effectiveness of the multi-view processing.**
        ---

    **2. claims: 3, 11**

        **to reduce parallax between the captured images.**
        ---

    **3. claims: 4-6, 8, 12-14**

        **to provide an alternative method for determining a confidence score for each image.**
        ---

    **4. claims: 7, 15**

        **to provide an alternative method for determining a confidence score for each image.**
        ---

## ANNEX TO THE EUROPEAN SEARCH REPORT
## ON EUROPEAN PATENT APPLICATION NO.

EP 21 20 3696

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2022

| Patent document cited in search report | | Publication date | Patent family member(s) | | Publication date |
|---|---|---|---|---|---|
| US 2012212651 | A1 | 23-08-2012 | CN 102682440 | A | 19-09-2012 |
| | | | JP 5820257 | B2 | 24-11-2015 |
| | | | JP 2012186790 | A | 27-09-2012 |
| | | | US 2012212651 | A1 | 23-08-2012 |
| JP 2021027584 | A | 22-02-2021 | NONE | | |

EPO FORM P0459